(19) Europäisches Patentamt
European Patent Office
Office européen des brevets

(11) **EP 3 172 415 B1**

(12) **EUROPÄISCHE PATENTSCHRIFT**

(45) Veröffentlichungstag und Bekanntmachung des Hinweises auf die Patenterteilung:
**25.04.2018 Patentblatt 2018/17**

(21) Anmeldenummer: **15745399.4**

(22) Anmeldetag: **23.07.2015**

(51) Int Cl.:
*F01N 3/20* (2006.01)   *F01N 3/28* (2006.01)
*F01N 13/00* (2010.01)   *B01D 53/94* (2006.01)
*B01J 35/04* (2006.01)

(86) Internationale Anmeldenummer:
**PCT/EP2015/001520**

(87) Internationale Veröffentlichungsnummer:
**WO 2016/012097 (28.01.2016 Gazette 2016/04)**

(54) **KATALYSATOREINHEIT UND ABGASKATALYSATOR**

CATALYST UNIT AND EXHAUST GAS CATALYST

UNITÉ DE CATALYSEUR ET CATALYSEUR DE GAZ D'ÉCHAPPEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.07.2014 DE 102014010858**

(43) Veröffentlichungstag der Anmeldung:
**31.05.2017 Patentblatt 2017/22**

(73) Patentinhaber: **MAN Diesel & Turbo SE 86153 Augsburg (DE)**

(72) Erfinder:
• DÖRING, Andreas
 82008 München/Unterhaching (DE)
• LOSHER, Richard
 86381 Krumbach (DE)

(56) Entgegenhaltungen:
WO-A1-2014/050179   US-A1- 2005 276 734
US-A1- 2011 030 355

**Beschreibung**

Die Erfindung betrifft eine Katalysatoreinheit gemäß dem Oberbegriff des Anspruchs 1. Des Weiteren betrifft die Erfindung einen Abgaskatalysator.

Abgaskatalysatoren für Großmotoren, wie zum Beispiel für Brennkraftmaschinen in Kraftwerken oder auch für Schiffsdieselbrennkraftmaschinen, verfügen typischerweise über mehrere Katalysatoreinheiten, wobei jede Katalysatoreinheit einen nicht metallischen, insbesondere keramischen oder aus Fasermatten aufgebauten, von Abgas durchströmten Katalysatorkörper und ein metallisches Gehäuse aufweist, welches den Katalysatorkörper abschnittsweise umgibt. Das metallische Gehäuse der jeweiligen Katalysatoreinheit dient der definierten Anbindung der jeweiligen Katalysatoreinheit an andere Baugruppen eines Abgassystems der Brennkraftmaschine, so zum Beispiel der Anbindung an abgasführende Leitungen. Der keramische Katalysatorkörper einer Katalysatoreinheit, der bei Abgaskatalysatoren für Großmotoren eine im Wesentlichen quaderförmige Kontur mit einer im Wesentlichen rechteckigen Einströmseite und einer im Wesentlichen rechteckigen Ausströmseite aufweist, wird auch als Wabenkörper oder Honeycomb und das Gehäuse einer Katalysatoreinheit auch als Canning bezeichnet. Ein keramischer Katalysatorkörper für eine Katalysatoreinheit ist im metallischen Gehäuse der Katalysatoreinheit über mindestens eine Lagermatte fixiert, die in einem Spalt zwischen dem Katalysatorkörper und dem Gehäuse der jeweiligen Katalysatoreinheit positioniert ist. Für stationäre Kraftwerksanwendungen kann der Katalysatorkörper ohne weitere spezielle Maßnahmen im Gehäuse der Katalysatoreinheit über eine oder mehrere Lagermatten ausreichend fixiert werden. Insbesondere für instationäre Anwendungen, wie zum Beispiel für Schiffsanwendungen bzw. Marineanwendungen, besteht jedoch das Problem, dass die Katalysatoreinheit Schwingungen bzw. Vibrationen ausgesetzt ist, die zu einem Verrutschen des Katalysatorkörpers in der jeweiligen Katalysatoreinheit oder gar zu einem Lösen desselben aus dem Gehäuse der Katalysatoreinheit führen können.

Es besteht daher Bedarf an einer Katalysatoreinheit, insbesondere für Schiffsanwendungen bzw. Marineanwendungen, in welcher trotz der Belastung durch Vibrationen bzw. Schwingungen der Katalysatorkörper einer Katalysatoreinheit sicher im Gehäuse derselben gehalten werden kann, ohne die Gefahr eines Verrutschens des Katalysatorkörpers oder eines Lösens desselben.

Aus der WO 2014/050179 A ist bereits eine Katalysatoreinheit der eingangs beschriebenen Art bekannt.

Hiervon ausgehend liegt der vorliegenden Erfindung die Aufgabe zugrunde, eine Katalysatoreinheit für einen Abgaskatalysator neu zur optimalen Aufnahme in einem Gehäuse zu dimensionieren.

Diese Aufgabe wird durch eine Katalysatoreinheit nach Anspruch 1 gelöst. Erfindungsgemäß weisen die Einströmseite und die Ausströmseite begrenzende Ränder bzw. Kanten des Katalysatorkörpers jeweils Abmessungen zwischen 210 mm und 280 mm auf; wobei der Spalt zwischen den Rändern des Katalysatorkörpers und dem metallischen Gehäuse senkrecht zur Durchströmungsrichtung des Katalysatorkörpers gesehen eine Abmessung aufweist, die sich nach folgender Beziehung bestimmt: $s \leq \rho*5$, wobei s die Abmessung des Spalt in mm ist, und wobei $\rho$ der dimensionslose Betrag der in kg/m$^2$ ausgedrückten Dichte der oder jeder Lagermatte ist. Es ist eine Erkenntnis der hier vorliegenden Erfindung, dass durch die definierten Abmessungen der Einströmseite und der Ausströmseite des Katalysatorkörpers und durch die definierte Dimensionierung des Spalts zwischen dem Katalysatorkörper und dem Gehäuse, die von der Dichte der oder jeder Lagermatte abhängig ist, ein Katalysatorkörper besonders vorteilhaft in einem Gehäuse unter Bildung einer Katalysatoreinheit aufgenommen werden kann, ohne dass die Gefahr besteht, dass infolge der im Betrieb auftretenden Vibrationsbelastungen und Schwingungsbelastungen der Katalysatorkörper im Gehäuse verrutscht oder sich vom Gehäuse der jeweiligen Katalysatoreinheit löst. Dabei ist in dem Gehäuse der jeweiligen Katalysatoreinheit ein einziger Katalysatorkörper angeordnet.

Nach einer vorteilhaften Weiterbildung bestimmt sich die Abmessung des Spalts zwischen den Rändern des Katalysatorkörpers und dem metallischen Gehäuse nach folgender Vorgabe: $s \leq \rho*4$, wobei die Dichte der oder jeder Lagermatte zwischen 0,9 kg/m$^2$ und 2,2 kg/m$^2$ beträgt. Hiermit kann die Fixierung des Katalysatorkörpers einer Katalysatoreinheit im Gehäuse der Katalysatoreinheit weiter verbessert werden.

Nach einer weiteren vorteilhaften Weiterbildung weist das Gehäuse bei einem sich senkrecht zur Durchströmungsrichtung des Katalysatorkörpers erstreckenden Querschnitt eine im wesentlichen rechteckige Querschnittsfläche auf, wobei die Querschnittsfläche begrenzende Ränder bzw. Kanten des Gehäuses, die parallel zu den die Einströmseite und der Ausströmseite begrenzenden Rändern bzw. Kanten des Katalysatorkörpers verlaufen, Abmessungen zwischen 220 mm und 290 mm aufweisen, wobei Seitenwände des Gehäuses senkrecht zur Durchströmungsrichtung des Katalysatorkörpers eine Wandstärke zwischen 0,9 mm und 2,2 mm aufweisen, und wobei die Abmessung der Spalts senkrecht zur Durchströmungsrichtung des Katalysatorkörpers maximal 8 mm, bevorzugt 6 mm beträgt. Hiermit kann die Fixierung des Katalysatorkörpers einer Katalysatoreinheit im Gehäuse der Katalysatoreinheit weiter verbessert werden.

Erfindungsgemäß weist das Gehäuse im Bereich der Einströmseite und im Bereich der Ausströmseite des Katalysatorkörpers Vorsprünge auf, die den Spalt zwischen dem Katalysatorkörper und dem Gehäuse zumindest teilweise verschließen und die in der Projektion die Einströmseite und die Ausströmseite benachbart zu den die Einströmseite und der Ausströmseite begrenzenden Rändern bzw. Kanten des Katalysatorkörpers überdecken. Über diese Vorsprünge kann die Fixierung des Katalysatorkörpers der Katalysatoreinheit im Gehäuse derselben weiter verbessert werden. Weiterhin übernehmen diese Vorsprünge eine Dichtfunktion und verbessern daher die Durchströmung des Katalysatorkörpers der Katalysatoreinheit mit Abgas. Diese Vorsprünge weisen höchstens eine Breite von 20 mm, bevorzugt eine Breite von 7 mm bis 17 mm auf.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

Fig. 1:     eine perspektivische Ansicht einer erfindungsgemäßen Katalysatoreinheit für einen Abgaskatalysator;

Fig. 2:     eine Draufsicht auf die Einströmseite der Katalysatoreinheit;

Fig. 3:     eine perspektivische Ansicht des Katalysatorkörpers der erfindungsgemäßen Katalysatoreinheit der Fig. 1 und 2; und

Fig. 4:     eine Draufsicht auf die Einströmseite des Katalysatorkörpers.

Die hier vorliegende Erfindung betrifft eine Katalysatoreinheit für einen Abgaskatalysator einer Brennkraftmaschine für Schiffsanwendungen bzw. Marineanwendungen und einen Abgaskatalysator.

Insbesondere ist die erfindungsgemäße Katalysatoreinheit als SCR-Katalysatoreinheit für einen SCR-Abgaskatalysator einer SchiffsdieselBrennkraftmaschine ausgebildet.

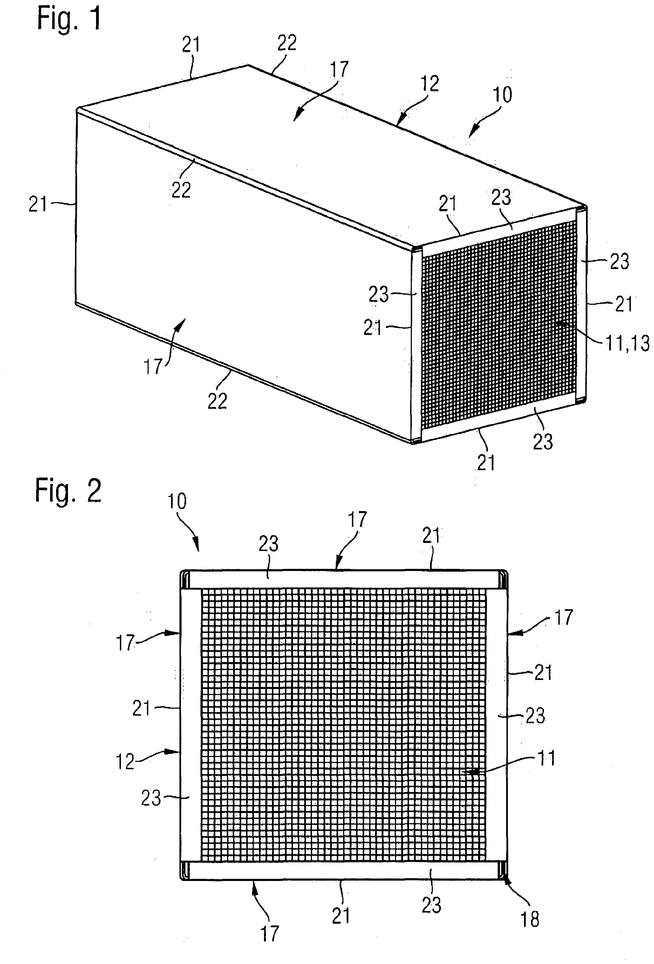

Fig. 1 und 2 zeigen unterschiedliche Ansichten einer erfindungsgemäßen Katalysatoreinheit 10, wobei die Katalysatoreinheit 10 einen von Abgas durchströmten, keramischen Katalysatorkörper 11 aufweist, der in einem metallischen Gehäuse 12 angeordnet ist. In dem metallischen Gehäuse 12 der Katalysatoreinheit 10 ist ein einziger keramischer Katalysatorkörper 11 angeordnet.

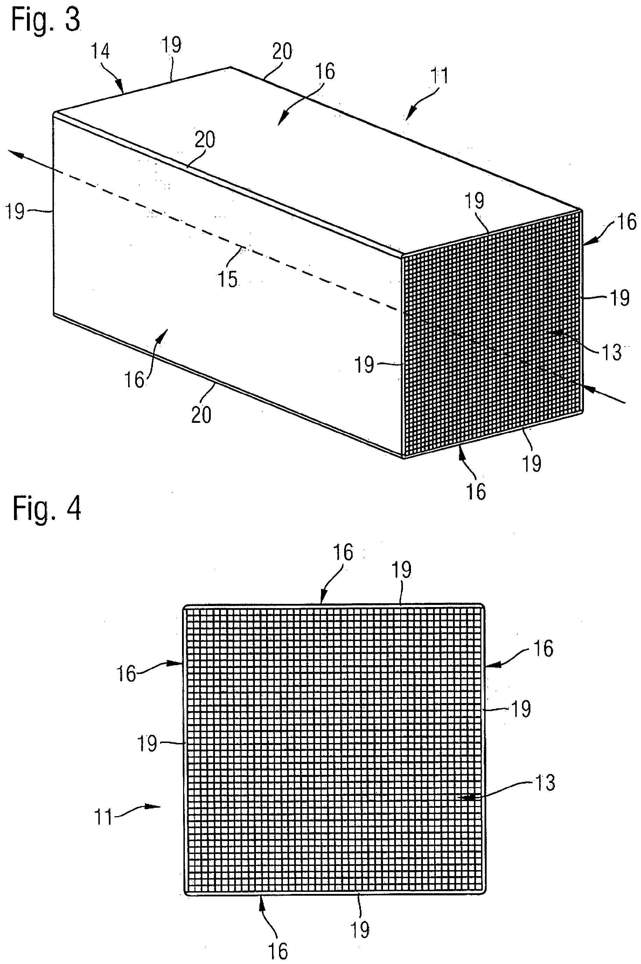

Der Katalysatorkörper 11, der in Fig. 3 und 4 in Alleindarstellung gezeigt ist, verfügt über eine im Wesentlichen quaderförmige Kontur mit einer im Wesentlichen rechteckigen Einströmseite 13 und einer ebenfalls im Wesentlichen rechteckigen Ausströmseite 14. Zwischen der Einströmseite 13 und der Ausströmseite 14 erstrecken sich von Abgas durchströmte Kanäle, wobei eine Durchströmungsrichtung des Katalysatorkörpers 11 in Fig. 3 durch einen Pfeil 15 visualisiert ist. Zwischen der Einströmseite 13 und der Ausströmseite 14 des Katalysatorkörpers 11 erstrecken sich geschlossene Seitenwände 16 des Katalysatorkörpers 11.

Der Katalysatorkörper 11 mit der im Wesentlichen quaderförmigen Kontur verfügt demnach über vier geschlossene Seitenwände 16, die sich zwischen der Einströmseite 13 und der Ausströmseite 14 des Katalysatorkörpers 11 erstrecken, wobei sowohl die Einströmseite 13 und die Ausströmseite 14 als auch die Längsseiten 16 im Wesentlichen rechteckig konturiert sind. Die Einströmseite 13 und die Ausströmseite 14 ermöglichen eine Durchströmung des Katalysatorkörpers 11 mit Abgas durch die sich zwischen der Einströmseite 13 und der Ausströmseite 14 erstreckenden Kanäle des Katalysatorkörpers 11, wobei der Katalysatorkörper 11 im Bereich der sich zwischen der Einströmseite 13 und der Ausströmseite 14 erstreckenden Längsseiten 16 geschlossen ist.

Das metallische Gehäuse 12 der Katalysatoreinheit 10 umgibt den Katalysatorkörper 11 abschnittsweise, nämlich derart, dass das Gehäuse 12 die Durchströmung des Katalysatorkörpers 11 mit Abgas nicht beeinträchtigt.

So kann insbesondere Fig. 1 entnommen werden, dass das Gehäuse 12 der Katalysatoreinheit 11 über Seitenwände 17 verfügt, die sich parallel zu den geschlossenen Seitenwände 16 des Katalysatorkörpers 11 erstrecken. Im Bereich der Einströmseite 13 und der Ausströmseite 14 des Katalysatorkörpers 11 gibt das Gehäuse 12 den Katalysatorkörper 11 frei.

Zwischen dem Katalysatorkörper 11 und dem Gehäuse 12 der Katalysatoreinheit 10 ist ein Spalt 18 ausgebildet, der sich senkrecht zur Durchströmungsrichtung des Katalysatorkörpers 11 gesehen umlaufend um denselben herum erstreckt, sodass der Spalt 18 zwischen allen vier Seitenwänden 16 des Katalysatorkörpers 11 und den angrenzenden Seitenwänden 17 des Gehäuses 12 der Katalysatoreinheit 10 ausgebildet ist.

In diesem Spalt 18 ist mindestens eine in den Figuren nicht gezeigte Lagermatte positioniert, um den Katalysatorkörper 11 im Gehäuse 12 der Katalysatoreinheit 10 zu fixieren.

Bei der erfindungsgemäßen Katalysatoreinheit 10 weisen die Einströmseite 13 und die Ausströmseite 14 begrenzende Ränder bzw. Kanten 19 des Katalysatorkörpers 11 jeweils Abmessungen zwischen 210 mm und 280 mm auf. Dann, wenn alle vier Ränder bzw. Kanten 19 identische Abmessungen aufweisen, sind Einströmseite 13 und Ausströmseite 14 im Wesentlichen quadratisch konturiert.

Der Spalt 18 zwischen dem Katalysatorkörper 11 und dem metallischen Gehäuse 12, nämlich den Seitenwänden 16 und 17 von Katalysatorkörper 11 und Gehäuse 12, weist senkrecht zur Durchströmungsrichtung 15 des Katalysatorkörpers 11 gesehen eine Abmessung auf, die sich nach folgender Beziehung bestimmt: $s \leq \rho \cdot 5$, wobei s die Abmessung des Spalt in mm (Millimeter) ist, und wobei $\rho$ der dimensionslose Betrag der in kg/m$^2$ (Kilogramm pro Quadratmeter) ausgedrückten Dichte der oder jeder Lagermatte ist. Bevorzugt bemisst sich der Spalt 18 zwischen dem Katalysatorkörper 11 und dem metallischen Gehäuse 12 senkrecht zur Durchströmungsrichtung 15 des Katalysatorkörpers 11 gesehen nach folgender Beziehung: $s \leq \rho * 4$. Die Dichte der oder jeder zur Fixierung des Katalysatorkörpers 11 im Gehäuse 12 eingesetzten Lagermatte beträgt vorzugsweise zwischen 0,9 kg/m² und 2,2 kg/m².

Die zur Fixierung eingesetzte Lagermatte weist vorzugsweise einen Gesamtfaseranteil zwischen 50% und 70% und einen Vermiculitanteil zwischen 30% und 50% auf. Der $SiO_2$-Anteil am Gesamtfaseranteil beträgt mindestens 55%.

Der von Abgas durchströmte Katalysatorkörper 11 verfügt über eine Länge, die durch den Abstand zwischen der Einströmseite 13 und der Ausströmseite 14 bestimmt wird, wobei diese Länge insbesondere zwischen 500 mm und 690 mm, bevorzugt 550 mm bis 660 mm, höchst bevorzugt 590 mm bis 630 mm beträgt. Eine Länge von Rändern bzw. Kanten 20 des Katalysatorkörpers 11, die sich senkrecht zu den Rändern 19 an der Einströmseite 13 und der Ausströmseite 14 erstrecken, liegt demnach in diesem Bereich.

Vorzugsweise ist die senkrecht zur Durchströmungsrichtung 15 definierte Abmessung des Spalts 18 über die gesamte Länge des Katalysatorkörpers 11 identisch. Auf Grund von Toleranzen des Katalysatorkörpers 11 kann in Durchströmungsrichtung gesehen die Abmessung des Spalts 18 senkrecht zur Durchströmungsrichtung jedoch auch variieren.

Besonders bevorzugt ist eine Katalysatoreinheit, deren Ränder oder Kanten 19, welche die Einströmseite 13 und die Ausströmseite 14 begrenzen, jeweils eine Abmessung zwischen 210 mm und 280 mm, bevorzugt zwischen 230 und 260 mm aufweist, und deren Ränder bzw. Kanten 20, welche die Länge des Katalysatorkörpers 11 definieren, eine Länge zwischen 500 mm und 690 mm, bevorzugt 550 mm bis 660 mm, höchst bevorzugt 590 mm bis 630 mm aufweisen. Das Gehäuse 12 verfügt dann über Ränder bzw. Kanten 21, die sich im Wesentlichen parallel zu den Rändern bzw. Kanten 19 der Einströmseite 13 und der Ausströmseite 14 des Katalysatorkörpers 11 erstrecken und eine Länge zwischen 220 mm und 290 mm, bevorzugt 240 mm bis 260 mm aufweisen. Die Ränder bzw. Kanten 22 des Gehäuses 12, die senkrecht zu den Rändern bzw. Kanten 21 des Gehäuses 12 und im Wesentlichen parallel zu den Rändern bzw. Kanten 20 des Katalysatorkörpers 11 verlaufen und die Länge des Gehäuses 12 bestimmen, verfügen über eine Abmessung zwischen 510 mm und 710 mm, bevorzugt zwischen 590 mm und 630 mm.

Die Seitenwände 17 des Gehäuses 12 verfügen senkrecht zur Durchströmungsrichtung der Katalysatoreinheit 10 gesehen über eine Dicke zwischen 0,9 mm und 2,2 mm.

Der von den Seitenwänden 16 und 17 des Katalysatorkörpers 11 und des Gehäuses 12 definierte bzw. begrenzte Spalt 18 verfügt senkrecht zur Durchströmungsrichtung 15 gesehen über eine Abmessung von maximal 8 mm, bevorzugt von maximal 6 mm.

Das Gehäuse 12 der Katalysatoreinheit 10, welches den Katalysatorkörper 11 der Katalysatoreinheit 10 zumindest im Bereich der Seitenwände 16 des Katalysatorkörpers 11 abschnittsweise umgibt, ist vorzugsweise in Richtung auf den Katalysatorkörper 11 eingezogen, um die Fixierung des Katalysatorkörpers 11 im Gehäuse 12 zu verbessern. Hierdurch kann eine definierte Pressung zwischen dem Gehäuse 12 und dem Gehäuse 11 unter Zwischenanordnung mindestens einer Lagermatte eingestellt werden.

Über die Länge des Katalysatorkörpers 11 gesehen sind vorzugsweise mindestens zwei Matten im Spalt 18 positioniert.

Sollte in Durchströmungsrichtung 15 des Katalysatorkörpers 11 gesehen in Abschnitten des Spalts 18 keine Lagermatte zwischen dem Katalysatorkörper 11 und dem Gehäuse 12 positioniert sein, so ist es zur Gewichtsreduzierung vorteilhaft, das Gehäuse 12 in diesen Abschnitten, in welchen keine Lagermatte positioniert ist, mit Aussparungen zu versehen.

Im gezeigten, bevorzugten Ausführungsbeispiel weist das Gehäuse 12 im Bereich der Einströmseite 13 und der Ausströmseite 14 des Katalysatorkörpers 11 Vorsprünge 23 auf.

Die Vorsprünge 23 verschließen im Bereich der Einströmseite 13 und der Ausströmseite 14 den Spalt 18 zwischen dem Katalysatorkörper 11 und dem Gehäuse 12 zumindest abschnittsweise und überdecken in der Projektion die Einströmseite 13 und die Ausströmseite 14 des Katalysatorkörpers 11 abschnittsweise, jedoch nur geringfügig unmittelbar benachbart zu den Rändern bzw. Kanten 19 der Einströmseite 13 und Ausströmseite 14 des Katalysatorkörpers 11. Hierdurch kann im Bereich der Einströmseite 13 und der Ausströmseite 14 der Spalt 18 abgedichtet werden und ferner kann die Fixierung des Katalysatorkörpers 11 im Gehäuse 12 der Katalysatoreinheit 10 verbessert werden. Diese Vorsprünge 23 können als Abkantungen der Seitenwände 17 ausgebildet sein. Ferner ist es möglich, die Vorsprünge 23 bereitstellende Metallstege mit den Seitenwänden 17 zum Beispiel durch Verschweißen zu verbinden. Diese Vorsprünge weisen höchstens eine Breite von 20 mm, bevorzugt eine Breite von 7 mm bis 17 mm auf.

Der Katalysatorkörper 10 verfügt vorzugsweise über eine Außenwandstärke von mindestens 0,8 mm, bevorzugt von mindestens 0,9 mm, besonders bevorzugt von mindestens 1,0 mm, um eine ausreichende mechanische Stabilität sicherzustellen.

Ränder bzw. Kanten des Katalysatorkörpers 11 sind vorzugsweise abgerundet, insbesondere mit einem Radius von weniger als 6 mm, bevorzugt mit einem Radius von weniger als 5 mm, besonders bevorzugt mit einem Radius von weniger als 4 mm.

Eine Innenwandstärke des Katalysatorkörpers 11, durch die die Strömungskanäle ausgebildet werden, bestimmt sich vorzugsweise nach folgender Beziehung:

$$1{,}75 * Y^{(-0{,}3)} \leq d_{IW} \leq 1{,}75 * Y^{(-0{,}4)},$$

wobei $d_{IW}$ die Abmessung der Innenwandstärke in mm (Millimeter) ist, und wobei Y der dimensionslose Betrag der in cpsi (cells per square inch) ausgedrückten Zelldichte des Katalysatorkörpers 11 ist.

Die Dichte des Katalysatorkörpers 11 beträgt insbesondere weniger als 550 kg/m$^3$, bevorzugt weniger als 500 kg/m$^3$, besonders bevorzugt weniger als 450 kg/m$^3$.

Der Wärmedehnungsausdehnungskoeffizient des Katalysatorkörpers 11 liegt vorzugsweise zwischen $5{,}1 * 10^{-6}$ 1/K und $7{,}0 * 10^{-6}$ 1/K.

Die isostatische Druckfestigkeit des Katalysatorkörpers 11 beträgt insbesondere mindestens 6 bar, bevorzugt mindestens 7 bar, besonders bevorzugt mindestens 8 bar.

Der freie Durchströmungsquerschnitt des Katalysatorkörpers 11, der durch das Verhältnis des durch die von Abgas durchströmbaren Kanäle des Katalysatorkörpers 11 definierten Strömungsquerschnitts und des Gesamtquerschnitts des Katalysatorkörpers 11 im Bereich der Einströmseite 13 und der Ausströmseite 14 definiert wird, beträgt mindestens 68%, bevorzugt mindestens 70%, besonders bevorzugt mindestens 73%.

Das Gesamtgewicht der Katalysatoreinheit 10 aus Katalysatorkörper 11, Gehäuse 12 und mindestens einer Lagermatte beträgt weniger als 40 kg, bevorzugt weniger als 30 kg, besonders bevorzugt weniger als 26 kg.

Die erfindungsgemäße Katalysatoreinheit 10 eignet sich besonders bevorzugt zur Verwendung als SCR-Katalysatoreinheit eines SCR-Abgaskatalysators einer Dieselbrennkraftmaschine für Schiffsanwendungen bzw. Marineanwendungen, ist allerdings nicht auf diese beschränkt, d.h., sie findet auch Anwendung bei Oxidationskatalysatoren und Partikelfilter.

Auch dann, wenn die Katalysatoreinheit 10 Vibrationsbelastungen ausgesetzt ist, wird der Katalysatorkörper 11 sicher im Gehäuse 12 der Katalysatoreinheit 10 gehalten. Es besteht keine Gefahr, dass der Katalysatorkörper 11 im Gehäuse 12 verrutscht oder sich sogar löst.

Wie bereits erwähnt, umfasst eine erfindungsgemäße Katalysatoreinheit 10 ein Gehäuse 12, in dem ein einziger keramischer Katalysatorkörper 11 positioniert ist. Bei der erfindungsgemäßen Katalysatoreinheit 10 sind demnach nicht mehrere Katalysatorkörper in einem Gehäuse aufgenommen, vielmehr wird für jeden Katalysatorkörper 11 ein individuelles Gehäuse 12 bereitgehalten.

Ein erfindungsgemäßer Abgaskatalysator umfasst mehrere derartige Katalysatoreinheiten 10.

Bezugszeichenliste

| 10 | Katalysatoreinheit |
| 11 | Katalysatorkörper |
| 12 | Gehäuse |
| 13 | Einströmseite |
| 14 | Ausströmseite |
| 15 | Durchströmungsrichtung |
| 16 | Seitenwand |
| 17 | Seitenwand |
| 18 | Spalt |
| 19 | Rand / Kante |
| 20 | Rand / Kante |
| 21 | Rand / Kante |
| 22 | Rand / Kante |
| 23 | Vorsprung |

Patentansprüche

1. Katalysatoreinheit (10), insbesondere SCR-Katalysatoreinheit für einen SCR-Abgaskatalysator einer Schiffsdieselbrennkraftmaschine, mit

einem von Abgas durchströmten, nicht metallischen, insbesondere keramischen oder faserhaltigen Katalysatorkörper (11), der eine im Wesentlichen quaderförmige Kontur mit einer im Wesentlichen rechteckigen Einströmseite (13) und einer im Wesentlichen rechteckigen Ausströmseite (14) aufweist;
einem metallischen Gehäuse (12), welches den Katalysatorkörper (11) abschnittsweise umgibt;
mindestens einer Lagermatte, die in einem zwischen dem Katalysatorkörper (11) und dem Gehäuse (12) ausgebildeten Spalt (18) positioniert ist;
**dadurch gekennzeichnet, dass**
die Einströmseite (13) und die Ausströmseite (14) begrenzende Ränder bzw. Kanten (19) des Katalysatorkörpers (11) jeweils Abmessungen zwischen 210 mm und 280 mm, bevorzugt zwischen 230 mm und 260 mm, aufweisen;
der Spalt (18) zwischen dem Katalysatorkörper (11) und dem metallischen Gehäuse (12) senkrecht zur Durchströmungsrichtung (15) des Katalysatorkörpers (11) gesehen eine Abmessung aufweist, die sich nach folgender Beziehung bestimmt: $s \leq \rho * 5$, wobei s die Abmessung des Spalts in mm ist, und wobei $\rho$ der dimensionslose Betrag der in kg/m$^2$ ausgedrückten Dichte der Lagermatte oder bei Verwendung mehrerer Lagermatten die gemittelte Dichte der Lagermatten ist,

wobei das Gehäuse (12) im Bereich der Einströmseite (13) und im Bereich der Ausströmseite (14) des Katalysatorkörpers (11) Vorsprünge (23) aufweist, die den Spalt (18) zwischen dem Katalysatorkörper (11) und dem Gehäuse (12) zumindest teilweise verschließen und die in der Projektion die Einströmseite (13) und die Ausströmseite (14) benachbart zu den die Einströmseite (13) und der Ausströmseite (14) begrenzenden Rändern bzw. Kanten (19) des Katalysatorkörpers (11) überdecken

und der Vorsprung (23) eine Breite von höchstens 20 mm, bevorzugt von 7 mm bis 17 mm, aufweist.

2. Katalysatoreinheit nach Anspruch 1, **dadurch gekennzeichnet, dass** der Spalt (18) zwischen dem Katalysatorkörper (11) und dem metallischen Gehäuse (12) senkrecht zur Durchströmungsrichtung (15) des Katalysatorkörpers (11) gesehen eine Abmessung aufweist, die sich nach folgender Beziehung bestimmt: $s \leq \rho * 4$.

3. Katalysatoreinheit nach Anspruch 1 oder 2, **dadurch gekennzeichnet, dass** die Dichte der oder jeder Lagermatte zwischen 0,9 kg/m$^2$ und 2,2 kg/m$^2$ beträgt.

4. Katalysatoreinheit nach einem der Ansprüche 1 bis 3, **dadurch gekennzeichnet, dass** die oder jede Lagermatte einen Gesamtfaseranteil zwischen 50% und 70%, mit einem $SiO_2$-Faseranteil von mindestens 55% am Gesamtfaseranteil, und einen Vermiculitanteil zwischen 30% und 50% aufweist.

5. Katalysatoreinheit nach einem der Ansprüche 1 bis 4, **dadurch gekennzeichnet, dass**

    das Gehäuse (12) bei einem sich senkrecht zur Durchströmungsrichtung (15) des Katalysatorkörpers (11) erstreckenden Querschnitt eine im wesentlichen rechteckige Querschnittsfläche aufweist, wobei die Querschnittsfläche begrenzende Ränder bzw. Kanten (21) des Gehäuses (12), die parallel zu den die Einströmseite (13) und der Ausströmseite (14) begrenzenden Rändern bzw. Kanten (19) des Katalysatorkörpers (11) verlaufen, Abmessungen zwischen 220 mm und 290 mm aufweisen,

    Seitenwände (17) des Gehäuses (12) senkrecht zur Durchströmungsrichtung (15) des Katalysatorkörpers (11) ein Wandstärke zwischen 0,9 mm und 2,2 mm aufweisen,

    die Abmessung der Spalts (18) senkrecht zur Durchströmungsrichtung (15) des Katalysatorkörpers (11) maximal 8 mm, bevorzugt maximal 6 mm, beträgt.

6. Katalysatoreinheit nach einem der Ansprüche 1 bis 5, **dadurch gekennzeichnet, dass** das Gehäuse (12) in den Abschnitten, in welchen zwischen dem Gehäuse (12) und dem Katalysatorkörper (11) mindestens eine Lagermatte positioniert ist, in Richtung auf den Katalysatorkörper (11) eingezogen ist.

7. Katalysatoreinheit nach einem der Ansprüche 1 bis 6 **dadurch gekennzeichnet, dass** das Gehäuse (12) in den Abschnitten, in welchen zwischen dem Gehäuse (12) und dem Katalysatorkörper (11) keine Lagermatte positioniert ist, Aussparungen aufweist.

8. Katalysatoreinheit nach einem der Ansprüche 1 bis 7, **dadurch gekennzeichnet, dass** der Katalysatorkörper (11)

    eine Außenwandstärke von mindestens 0,8 mm, bevorzugt von mindestens 0,9 mm, besonders bevorzugt von mindestens 1,0 mm, aufweist;

    abgerundete Ränder bzw. Kanten (19, 20) mit einem Radius von weniger als 6 mm, bevorzugt von weniger als 5 mm, besonders bevorzugt von weniger als 4 mm, aufweist;

    eine Innenwandstärke aufweist, die sich nach folgende Beziehung bestimmt: $1,75 * Y^{(-0,3)} \leq d_{IW} \leq 1,75 * Y^{(-0,4)}$, wobei $d_{IW}$ die Abmessung der Innenwandstärke in mm (Millimeter) ist, und wobei Y der dimensionslose Betrag der in cpsi (cells per square inch) ausgedrückten Zelldichte des Katalysatorkörpers (11) ist.

9. Katalysatoreinheit nach einem der Ansprüche 1 bis 7, **dadurch gekennzeichnet, dass** der Katalysatorkörper (11)

    eine Dichte von weniger als 550 kg/m$^3$, bevorzugt von weniger als 500 kg/m$^3$, besonders bevorzugt von weniger als 450 kg/m$^3$, aufweist;

    einen Wärmeausdehnungskoeffizienten zwischen $5,1 * 10^{-6}$ 1/K und $7,0 * 10^{-6}$ 1/K aufweist;

    eine isostatische Druckfestigkeit von mindestens 6 bar, bevorzugt von mindestens 7 bar, besonders bevorzugt von mindestens 8 bar, aufweist;

    einen freien Durchströmungsquerschnitt von mindestens 68 %, bevorzugt von mindestens 70 %, besonders bevorzugt von mindestens 73%, aufweist.

10. Katalysatoreinheit nach einem der vorangehenden Ansprüche, **dadurch gekennzeichnet, dass** die Länge des Katalysatorkörpers zwischen 500 mm und 690 mm, bevorzugt zwischen 550 mm und 660 mm, höchst bevorzugt zwischen 590 mm und 630 mm beträgt.

11. Abgaskatalysator, mit mehreren Katalysatoreinheiten (10) nach einem der Ansprüche 1 bis 10.

## Claims

1. A catalyst unit (10), in particular SCR catalyst unit for an SCR exhaust gas catalytic converter of a diesel internal combustion engine for a ship, with
   a non-metallic, in particular ceramic or fibre-containing catalyst body (11) flowed through by exhaust gas, which has a substantially cuboid shape with a substantially rectangular inflow side (13) and a substantially rectangular outflow side (14);
   a metallic housing (12), which surrounds the catalyst body (11) in sections;
   at least one bearing mat, which is positioned between a gap (18) formed between the catalyst body (11) and the housing (12);
   **characterized in that**
   the margins or edges (19) of the catalyst body (11) delimiting the inflow side (13) and the outflow side (14) each have dimensions between 210 mm and 280 mm, preferably between 230 mm and 260 mm; the gap (18) between the catalyst body (11) and the metallic housing (12) perpendicularly to the through-flow direction (15) of the catalyst body (11) has a dimension which is determined according to the following relationship: $s \leq p*5$, wherein s is the dimension of the gap in mm, and wherein p is the dimensionless amount of the density of the bearing mat expressed in $kg/m^2$ or when multiple bearing mats are used, the mean density of the bearing mats, wherein the housing (12) in the region of the inflow side (13) and in the region of the outflow side (14) of the catalyst body (11) comprises protrusions (23), which at least partly close the gap (18) between the catalyst body (11) and the housing (12) and which, in the projection, cover the inflow side (13) and the outflow side (14) adjacent to the margins or edges (19) of the catalyst body (11) delimiting the inflow side (13) and the outflow side (14) and the protrusion (23) has a maximum width of 20 mm, preferably of 7 mm to 17 mm.

2. The catalyst unit according to Claim 1, **characterized in that** the gap (18) between the catalyst body (11) and the metallic housing (12) seen perpendicularly to the through-flow direction (15) of the catalyst body (11) has a dimension which is determined according to the following relationship: $s \leq p*4$.

3. The catalyst unit according to Claim 1 or 2, **characterized in that** the density of the or each bearing mat is between 0.9 $kg/m^2$ and 2.2 $kg/m^2$.

4. The catalyst unit according to any one of the Claims 1 to 3, **characterized in that** the or each bearing mat has a total fibre proportion between 50% and 70%, with an $SiO_2$ fibre proportion of at least 55% in the total fibre proportion, and a vermiculite proportion between 30% and 50%.

5. The catalyst unit according to any one of the Claims 1 to 4, **characterized in that** the housing (12) with a cross section extending perpendicularly to the through-flow direction (15) of the catalyst body (11) has a substantially rectangular cross-sectional area, wherein the margins or edges (21) of the housing (12) delimiting the cross-sectional area, which run parallel to the margins or edges (19) of the catalyst body (11) delimiting the inflow side (13) and the outflow side (14) have dimensions between 220 mm and 290 mm,
   side walls (17) of the housing (12) perpendicularly to the through-flow direction (15) of the catalyst body (11) have a wall thickness between 0.9 mm and 2.2 mm,
   the dimension of the gap (18) perpendicularly to the through-flow direction (15) of the catalyst body (11) is maximally 8 mm, preferably maximally 6 mm.

6. The catalyst unit according to any one of the Claims 1 to 5, **characterized in that** the housing (12) in the sections, in which at least one bearing mat is positioned between the housing (12) and the catalyst body (11), is retracted in the direction of the catalyst body (11).

7. The catalyst unit according to any one of the Claims 1 to 6, **characterized in that** the housing (12), in the sections in which no bearing mat is positioned between the housing (12) and the catalyst body (11), has recesses.

8. The catalyst unit according to any one of the Claims 1 to 7, **characterized in that** the catalyst body (11) has an outer wall thickness of at least 0.8 mm, preferably of at least 0.9 mm, particularly preferably of at least 1.0 mm;
   has rounded margins or edges (19, 20) with a radius of less than 6 mm, preferably of less than 5 mm, particularly preferably of less than 4 mm;
   has an inner wall thickness which is determined according to the following relationship:

$$1.75*Y^{(-0.3)} \leq d_{IW} \leq 1.75*Y^{(-0.4)},$$

   wherein $d_{IW}$ is the dimension of the inner wall thickness in mm (millimetre), and wherein Y is the dimensionless amount of the cell density of the catalyst body (11) expressed in cpsi (cells per square inch).

9. The catalyst unit according to any one of the Claims 1 to 7, **characterized in that** the catalyst body (11) has a density of less than 550 $kg/m^3$, preferably of less than 500 $kg/m^3$, particularly preferably of less than 450 $kg/m^3$;
   has a heat expansion coefficient between 5.1*10[-6]

1/K and 7.0*10⁻⁶ 1/K;

has an isostatic compressive strength of least 6 bar, preferably of at least 7 bar, particularly of at least 8 bar;

has a clear through-flow cross section of at least 68%, preferably of at least 70%, particularly preferably of at least 73%.

10. The catalyst unit according to any one of the preceding claims, **characterized in that** the length of the catalyst body is between 500 mm and 690 mm, preferably between 550 mm and 660 mm, most preferably between 590 mm and 630 mm.

11. An exhaust gas catalytic converter with multiple catalyst units (10) according to any one of the Claims 1 to 10.

**Revendications**

1. Unité de catalyseur (10), notamment unité de catalyseur SCR (à réduction catalytique sélective) pour un catalyseur de gaz d'échappement SCR d'un moteur diesel de bateau, comportant

un corps de catalyseur (11) traversé par les gaz d'échappement, non métallique, notamment céramique ou contenant des fibres, qui présente un contour essentiellement carré avec un côté d'admission (13) essentiellement rectangulaire et un côté d'échappement (14) essentiellement rectangulaire ;

un logement métallique (12), qui entoure par portions le corps de catalyseur (11) ;

au moins un treillis, qui est positionné dans un interstice (18) réalisé entre le corps de catalyseur (11) et le logement (12) ;

**caractérisée en ce que**

les bords, respectivement arêtes (19) délimitant le côté d'admission (13) et le côté d'échappement (14) du corps de catalyseur (11) présentent respectivement des dimensions comprises entre 210 mm et 280 mm, de préférence entre 230 mm et 260 mm ;

l'interstice (18) entre le corps de catalyseur (11) et le logement métallique (12) présente une dimension, vue perpendiculairement à la direction de traversée (15) du corps de catalyseur (11), qui correspond à la formule suivante : $s \leq \rho*5$, dans laquelle s est la dimension de l'interstice en mm et dans laquelle p est le montant sans dimension de la densité du treillis exprimée en $kg/m^2$ et lors de l'utilisation de plusieurs treillis est la densité moyenne des treillis,

dans laquelle le logement (12) présente au niveau du côté d'admission (13) et au niveau du côté d'échappement (14) du corps de catalyseur (11) des protubérances (23), qui obturent au moins partiellement l'interstice (18) entre le corps de catalyseur (11) et le logement (12) et qui recouvrent dans la projection le côté d'admission (13) et le côté d'échappement (14) dans le voisinage des bords, respectivement arêtes (19) du corps de catalyseur (11) délimitant le côté d'admission (13) et le côté d'échappement (14) et la protubérance (23) présente une largeur maximale de 20 mm, de préférence de 7 mm à 17 mm.

2. Unité de catalyseur selon la revendication 1, **caractérisée en ce que** l'interstice (18) entre le corps de catalyseur (11) et le logement métallique (12) présente une dimension, vu perpendiculairement à la direction de traversée (15) du corps de catalyseur (11), qui correspond à la formule suivante : $s \leq \rho*4$.

3. Unité de catalyseur selon la revendication 1 ou 2, **caractérisée en ce que** la densité de ou chaque treillis est comprise entre 0,9 $kg/m^2$ et 2,2 $kg/m^2$.

4. Unité de catalyseur selon une des revendications 1 à 3, **caractérisée en ce que** le ou chaque treillis présente une teneur totale en fibres comprise entre 50% et 70%, avec une teneur en fibre de $SiO_2$ d'au moins 55% sur la teneur en fibres totale et une teneur en vermiculite comprise entre 30% et 50%.

5. Unité de catalyseur selon une des revendications 1 à 4, **caractérisée en ce que** le logement (12) en présence d'une section transversale s'étendant perpendiculairement à la direction de traversée (15) du corps de catalyseur (11) une surface de section transversale essentiellement rectangulaire, dans laquelle les bords, respectivement les arêtes (21) du logement (12) délimitant la surface de section transversale, qui s'étendent parallèlement aux bords, respectivement arêtes (19) du corps de catalyseur (11) délimitant le côté d'admission (13) et le côté d'échappement (14), présentent des dimensions comprises entre 220 mm et 290 mm,

les parois latérales (17) du logement (12) présentent perpendiculairement à la direction de traversée (15) du corps de catalyseur (11) présentent une épaisseur de paroi comprise entre 0,9 mm et 2,2, mm,

la dimension de l'interstice (18) perpendiculairement à la direction de traversée (15) du corps de catalyseur (11) s'élève au maximum à 8 mm, de préférence au maximum à 6 mm.

6. Unité de catalyseur selon une des revendications 1 à 5, **caractérisée en ce que** le logement (12) est évidé dans la direction du corps de catalyseur (11) dans les sections, dans lesquelles entre le logement (12) et le corps de catalyseur (11) au moins un treillis est positionné.

7. Unité de catalyseur selon une des revendications 1 à 6, **caractérisée en ce que** le logement (12) présente des cavités dans les sections, dans lesquelles entre le logement (12) et le corps de catalyseur (11) aucun treillis n'est positionné.

8.  Unité de catalyseur selon une des revendications 1 à 7, **caractérisée en ce que** le corps de catalyseur (11) présente
    une épaisseur de paroi extérieure d'au moins 0,8 mm, de préférence d'au moins 0,9 mm, de manière la plus préférée d'au moins 1,0 mm ;
    des bords, respectivement arêtes arrondis (19, 20) avec un rayon inférieur à 6 mm, de préférence inférieur à 5 mm, de manière la plus préférée inférieur à 4 mm ;
    une épaisseur de paroi intérieure, qui correspond à la formule suivants :

$$1,75 * \Upsilon^{(-0,3)} \leq d_{iw} \leq 1,75 * \Upsilon^{(-0,4)},$$

    dans laquelle $d_{iw}$ est la dimension de l'épaisseur de paroi intérieure en mm (millimètres) et dans laquelle $\gamma$ est le montant sans dimensions de la densité cellulaire exprimée en cpsi (cellules par pouce carré) du corps de catalyseur (11).

9.  Unité de catalyseur selon une des revendications 1 à 7, **caractérisée en ce que** le corps de catalyseur (11) présente
    une épaisseur inférieure à 550 kg/m$^3$, de préférence inférieure à 500 kg/m$^3$, de manière la plus préférée inférieure à 450 kg/m$^3$ ;
    un coefficient de dilatation thermique compris entre $5,1 * 10^{-6}$ 1/K et $7,0 * 10^{-6}$ 1/K ;
    une résistance à la compression isostatique d'au moins 6 bar, de préférence d'au moins 7 bar, de manière la plus préférée d'au moins 8 bar ;
    une section transversale d'écoulement libre d'au moins 68%, de préférence d'au moins 70%, de manière la plus préférée d'au moins 73%.

10. Unité de catalyseur selon une des revendications précédentes, **caractérisée en ce que** la longueur du corps de catalyseur est comprise entre 500 mm et 690 mm, de préférence entre 550 mm et 660 mm, de manière la plus préférée entre 590 mm et 630 mm.

11. Catalyseur de gaz d'échappement, comportant plusieurs unités de catalyseur (10) selon une des revendications 1 à 10.

EP 3 172 415 B1

Fig. 1

Fig. 2

Fig. 3

Fig. 4

EP 3 172 415 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2014050179 A